# EUROPEAN PATENT APPLICATION

(11) **EP 1 359 206 A1**
(43) Date of publication of application: **05.11.2003**
(21) Application number: 03252263.3
(22) Date of filing: 10.04.2003
(51) Int. Cl.: C10G 75/04, E21B 37/06, C10L 1/22, C10L 1/14, C10L 10/00

(54) **Amine-unsaturated acid adducts as asphaltene dispersants in crude oil**

(30) Priority: 23.04.2002 US 374876 P
(71) Applicant: ROHM AND HAAS COMPANY, Philadelphia, Pennsylvania 19106-2399 (US)
(72) Inventor: Mukkamala, Ravindranath, Houston, Texas 77062 (US)
(74) Representative: Kent, Venetia Katherine

(57) **Abstract**

A composition comprising: (a) 0.001% to 5% of at least one compound of formula (I) 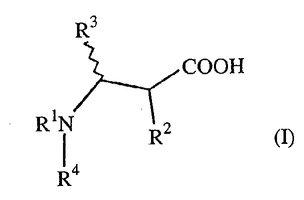 or a zwitterionic form or salt thereof, wherein R¹ is C₁₀-C₂₂ alkyl or aralkyl; R² and R³ independently are hydrogen or C₁-C₄ alkyl; R⁴ is hydrogen, C₁-C₂₂ alkyl, C₇-C₂₂ aralkyl, or -CH(R⁵)CH(R⁶)COOH, wherein R⁵ and R⁶ independently are hydrogen or C₁-C₄ alkyl; and (b) crude oil.

## Description

### Background

This invention relates generally to a method or dispersing asphaltenes in processing of crude oil.

Certain petroleum products, including heavy crude oils, which include materials referred to as "tars," "petroleum tars" or "tar sands," are rich in asphaltenes, metals and resins. The presence of these types of compounds can lead to various problems in the recovery, transportation, treatment and refining of crude oils, including increased viscosity, formation of stable emulsions, fouling and corrosion. French Pat. Appl. No. 2,789,999 discloses dispersants for asphaltenes in crude oil, including adducts of polyamines and salts of acrylic or methacrylic acid. However, this reference does not disclose the types of compounds used in the present application.

The problem addressed by this invention is to find materials suitable for improving processing of petroleum products.

### Statement of Invention

This invention is directed to a composition comprising: (a) 0.001% to 5% of at least one compound of formula (I) 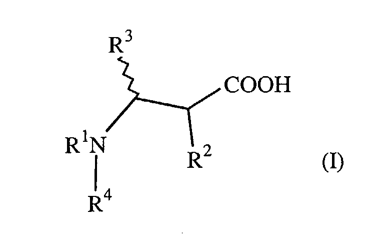 or a zwitterionic form or salt thereof, wherein R¹ is C₁₀-C₂₂ alkyl or aralkyl; R² and R³ independently are hydrogen or C₁-C₄ alkyl; R⁴ is hydrogen, C₁-C₂₂ alkyl, C₇-C₂₂ aralkyl, or -CH(R⁵)CH(R⁶)COOH, wherein R⁵ and R⁶ independently are hydrogen or C₁-C₄ alkyl; and (b) crude oil.

This invention is directed further to a method for dispersing asphaltenes in a petroleum product by adding to the petroleum product 0.001% to 5% of at least one compound of formula (I) or a zwitterionic form or salt thereof, wherein R¹ is C₁₀-C₂₂ alkyl or aralkyl; R² and R³ independently are hydrogen or C₁-C₄ alkyl; R⁴ is hydrogen, C₁-C₂₂ alkyl, C₇-C₂₂ aralkyl, or -CH(R⁵)CH(R⁶)COOH, wherein R⁵ and R⁶ independently are hydrogen or C₁-C₄ alkyl.

### Detailed Description

All percentages are weight percentages based on the entire composition, unless otherwise indicated. An "alkyl" group is a hydrocarbyl group having from one to twenty-two carbon atoms in a linear, branched or cyclic arrangement. Alkyl groups optionally have one or more double or triple bonds. Substitution on alkyl groups of one or more of halo, cyano, alkyl or alkoxy groups is permitted; alkoxy groups may in turn be substituted by one or more halo substituents. An "aryl" group is a substituent derived from an aromatic hydrocarbon compound. An aryl group has a total of from six to twenty ring atoms, and has one or more rings which are separate or fused. An "aralkyl" group is an "alkyl" group substituted by an "aryl" group. Substitution on aryl groups of one or more of halo, cyano, alkyl, heteroalkyl or alkoxy is permitted, with substitution by one or more halo groups being possible on alkyl, heteroalkyl or alkoxy groups.

Preferably, R¹ is a C₁₂-C₂₂ alkyl group, and most preferably, a C₁₆-C₂₂ alkyl group. Preferably, R¹ is unsubstituted. Preferably, R¹ is saturated. Preferably, R², R³, R⁵ and R⁶ independently are hydrogen or methyl. Preferably, R³ and R⁵ are hydrogen. Preferably, when R⁴ is C₁-C₂₂ alkyl, it is C₁-C₁₂ alkyl. Preferably R⁴ is -CH(R⁵)CH(R⁶)COOH. Typically, a compound of formula (I) results from reaction of a primary or secondary amine with acrylic, methacrylic or crotonic acid, or combinations thereof. Formation of a 1:1 adduct of a primary amine and an unsaturated acid results in a product in which R⁴ is hydrogen. A 1:2 adduct has R⁴ equal to -CH(R⁵)CH(R⁶)COOH. An adduct of a secondary amine and an unsaturated acid has R⁴= C₁₀-C₂₂ alkyl or aralkyl. In one preferred embodiment, R¹ is derived from an unsubstituted C₁₀-C₂₂ alkyl amine, R¹NH₂, preferably one which is an oil-soluble amine. In one preferred embodiment, the alkyl amine is a tertiary alkyl primary amine, i.e., a primary amine in which the alkyl group is attached to the amino group through a tertiary carbon. Examples of commercially available tertiary alkyl primary amines are the Primene™ amines available from Rohm and Haas Company, Philadelphia, PA.

In the present invention, at least one compound of formula (I) is added to a petroleum product, with the total amount of said compound(s) being from 0.001% to 5%, preferably from 0.01% to 5%, more preferably from 0.01% to 1%, more preferably from 0.01% to 0.2%, and most preferably from 0.02% to 0.2%. Under some pH and temperature conditions, the compound of formula (I) will exist in the zwitterionic form shown below in formula (II). 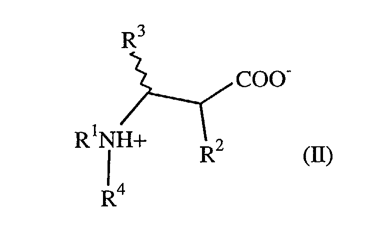 Salts of a compound of formula (I) also are suitable for use in the method of this invention. Preferably, the salts are formed by neutralization of a COOH with metal hydroxides or amines.

In addition to dispersing asphaltenes, the composition of the present invention typically also increases demulsibility, reduces sediment formation, reduces surface fouling and reduces corrosion. For crude oil recovery, the composition of the present invention can be injected directly into an injection well, or preferably diluted with solvent prior to injection. Suitable solvents include but are not limited to: petroleum distillates such as kerosene and gas oil; linear and branched aliphatic solvents such as pentane, hexanes, mixtures of nonanes and 2-ethylhexanes; cycloaliphatic mixtures commonly known as naphtha; aromatic solvents such as toluene, xylenes and commercial aromatic solvent mixtures; esters; ethers; alcohols such as ethanol, isopropanol, octanol and dodecanol; ketones such as acetone, cyclohexanone and acetophenone; and other polar solvents. Preferred dilutions are 0.01 to 50 wt% of the compound in the solvent, more preferred dilutions being 0.01 to 20 wt%, more preferred dilutions being 0.1 to 10%, and most preferred dilutions being 1 to 10 wt %.

### Examples

### Performance Criteria and Test Methods:

Asphaltene Dispersancy-test tube method: This test requires a previously made dispersion of asphaltene in xylenes (Aromatic 150 solvent) or asphaltenic heavy crude diluted in xylenes (Aromatic 150 solvent) at a known concentration. A solution of an additive formulation (0.1 mL, the active ingredient was typically at 5-10 wt%, making the treat rate 500-1000 ppm) was taken in to a 15.0 mL graduated glass centrifuge tube, and hexanes added such that the total volume in the tube became 10.0 mL. To this mixture of additive and hexanes, asphaltenic stock solution (0.1 mL) was added. The test tube was then capped, shaken vigorously for about a minute or 40-60 times by hand and allowed to stand. The volume of any precipitated asphaltenes settled at the bottom of the tube was recorded at 10, 30, 60, 90 and 1440 (24 h) min intervals. When no additive was used, the volume of asphaltenes precipitated in the first 0.5-1 h was 0.4-0.5 mL (4-5%); in fact, it was important to initially adjust the concentration of the asphaltene stock in such a way that under these conditions of dilution with paraffinic solvents, a 4-5 vol% of asphaltenic precipitation occurred. When the additive was an effective dispersant of asphaltene, then no precipitate was formed up to 24 h (Rating = 2; good). In some cases, no precipitation was observed in over 24 h to several days (Rating = 2+; excellent). If the additive was not a dispersant, then an almost immediate precipitation of asphaltenes occurred (Rating = 0; poor). Results for an acrylic acid-amine adduct are reported in the Table.

**Table**

| Acrylic acid-amine adduct | | |
|---|---|---|
| | oleylamine/acrylic acid 1:2 adduct | |
| | hexanes; treat rate: 2000 ppm | 2+ |
| | AROMATIC 150 SOLVENT; treat rate: 2000 ppm | 2+ |

The treat rate is the concentration of the salt in the crude oil.

AROMATIC 150 SOLVENT is a solvent mixture with a boiling range of 184-204°C which contains xylene isomers, and which is available from Exxon Mobil Chemical Co., Houston TX.

## Claims

1. A composition comprising:
(a) 0.001% to 5% of at least one compound of formula (I) 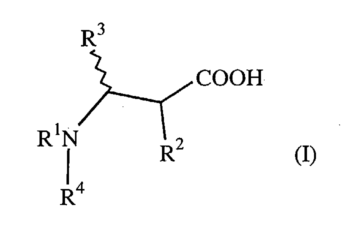 or a zwitterionic form or salt thereof, wherein R¹ is C₁₀-C₂₂ alkyl or aralkyl; R² and R³ independently are hydrogen or C₁-C₄ alkyl; R⁴ is hydrogen, C₁-C₂₂ alkyl, C₇-C₂₂ aralkyl, or -CH(R⁵)CH(R⁶)COOH, wherein R⁵ and R⁶ independently are hydrogen or C₁-C₄ alkyl; and
(b) crude oil.

2. The composition of claim 1 in which R¹ is C₁₀-C₂₂ alkyl and R², R³, R⁵ and R⁶ independently are hydrogen or methyl.

3. The composition of claim 2 in which R¹ is unsubstituted C₁₆-C₂₂ alkyl and R³ and R⁵ are hydrogen.

4. The composition of claim 3 in which R¹ is unsubstituted C₁₆-C₂₂ tertiary alkyl and R⁴ is -CH(R⁵)CH(R⁶)COOH.

5. The composition of claim 4 in which said at least one compound of formula (I) is present in an amount from 0.01% to 1%.

6. A method for dispersing asphaltenes in a petroleum product; said method comprising adding to the petroleum product 0.001% to 5% of at least one compound of formula (I) 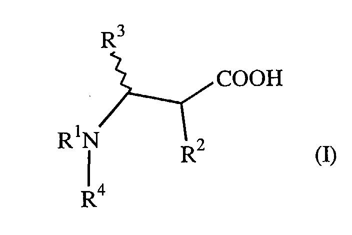 or a zwitterionic form or salt thereof, wherein R¹ is C₁₀-C₂₂ alkyl or aralkyl; R² and R³ independently are hydrogen or C₁-C₄ alkyl; R⁴ is hydrogen, C₁-C₂₂ alkyl, C₇-C₂₂ aralkyl, or -CH(R⁵)CH(R⁶)COOH, wherein R⁵ and R⁶ independently are hydrogen or C₁-C₄ alkyl.

7. The method of claim 6 in which in which R¹ is C₁₀-C₂₂ alkyl and R², R³, R⁵ and R⁶ independently are hydrogen or methyl.

8. The method of claim 7 in which R¹ is unsubstituted C₁₆-C₂₂ alkyl and R³ and R⁵ are hydrogen.

9. The method of claim 8 in which R¹ is unsubstituted C₁₆-C₂₂ tertiary alkyl and R⁴ is -CH(R⁵)CH(R⁶)COOH.

10. The method of claim 9 in which said at least one compound of formula (I) is present in an amount from 0.01% to 1%.
